(19) Europäisches Patentamt
European Patent Office
Office européen des brevets

(11) **EP 3 236 123 A1**

(12) **EUROPÄISCHE PATENTANMELDUNG**

(43) Veröffentlichungstag:
**25.10.2017 Patentblatt 2017/43**

(51) Int Cl.:
*F16K 31/126* (2006.01)   *F16K 31/163* (2006.01)
*F16K 31/165* (2006.01)

(21) Anmeldenummer: **16165928.9**

(22) Anmeldetag: **19.04.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Primetals Technologies Austria GmbH
4031 Linz (AT)**

(72) Erfinder:
• **Mikota, Gudrun
4210 Gallneukirchen (AT)**
• **Mikota, Josef
4210 Gallneukirchen (AT)**

(74) Vertreter: **Metals@Linz
Primetals Technologies Austria GmbH
Intellectual Property Upstream IP UP
Turmstraße 44
4031 Linz (AT)**

(54) **BETÄTIGUNGSEINRICHTUNG FÜR EINEN STEUERKOLBEN EINES HYDRAULIKVENTILS**

(57) Die Erfindung betrifft eine Betätigungseinrichtung (1, 1a, 1b) für einen Steuerkolben (2) eines Hydraulikventils (3). Durch die Erfindung wird eine schnelle Betätigungseinrichtung (1, 1a, 1b) geschaffen, welche zudem besonders einfach, robust und schmutzunempfindlich ist. Die Lösung erfolgt durch eine Betätigungseinrichtung (1, 1a, 1b) mit
- einem Aktuator (6) und einer Platte (5), wobei der Aktuator (6) einen zentralen Bereich der Platte (5) durchbiegen kann; und
- einen im Betrieb mit einer Druckflüssigkeit gefüllten Druckraum (7), wobei die Platte (5) den Druckraum (7) abdichtet und der Druckraum (7) den Steuerkolben (2) beaufschlagt, und die Fläche Ap der Platte (5) über dem Druckraum (7) größer als die Querschnittsfläche $A_K$ des Steuerkolbens (2) ist.

Fig 1

EP 3 236 123 A1

**Beschreibung**

Gebiet der Technik

Die vorliegende Erfindung betrifft das technische Gebiet der Hydraulik. In der Hydraulik werden Hydraulikventile zur Steuerung oder Regelung von hydraulischen Antrieben, wie linear sich bewegenden Hydraulikzylindern oder rotierenden Hydraulikmotoren, eingesetzt. Außerdem werden Ventile zum Öffnen und Schließen von Kühlmittelströmen verwendet.

Konkret befasst sich die Erfindung mit einer neuartigen Betätigungseinrichtung für einen Steuerkolben eines Hydraulikventils.

Mittels der Betätigungseinrichtung kann der Steuerkolben in axialer Richtung verschoben werden. Dadurch wird der Durchfluss eines Hydraulikfluids (bspw. Hydrauliköl oder Wasser) durch das Hydraulikventil geöffnet oder geschlossen bzw. auf einen bestimmten Durchfluss oder einen bestimmten Druck eingestellt. Einerseits kann durch die Betätigungseinrichtung ein hydraulischer Antrieb ein- oder ausgeschaltet werden, oder auf eine - mit dem Durchfluss durch das Hydraulikventil korrespondierende - Geschwindigkeit eingestellt werden. Andererseits kann über den Durchfluss eines Kühlmittels durch das Hydraulikventil die Kühlung, z.B. in einem Walzwerk oder in der Sekundärkühlung einer Stranggießmaschine, gezielt ein- oder ausgeschaltet werden, oder die Kühlleistung auf einen bestimmten Wert eingestellt werden. Die Einstellung der Kühlleistung erfolgt dabei unstetig bzw. schaltend, z.B. durch periodisches Ein- und Ausschalten des Volumenstroms, oder stetig, wobei durch die Betätigungseinrichtung der Steuerkolben des Hydraulikventils auf eine bestimmte Position verfahren wird.

Stand der Technik

Grundsätzlich sind im Stand der Technik bereits verschiedenste Betätigungseinrichtungen für das direkte oder indirekte Ansteuern eines Steuerkolbens eines Hydraulikventils bekannt.

Besonders schnelle Stetigventile werden nach dem Stand der Technik meist als ein- oder mehrstufige Servoventile ausgeführt. In diesem Fall weist die Betätigungseinrichtung mind. eine Servo-Vorstufe auf. Schnelle unstetige Schaltventile werden nach dem Stand der Technik meistens durch Betätigungseinrichtungen mit zumindest einem Proportional- oder Regelmagneten angesteuert.

Die indirekte Ansteuerung eines Ventils durch eine sogenannte Servo-Vorstufe bei Servoventilen ist aufgrund der hohen technischen Komplexität sehr aufwändig. Weiters sind Servoventile, besonders deren Betätigungseinrichtung, äußerst schmutzempfindlich, wenig robust und noch dazu sehr teuer. Schließlich ist die Steuerung oder Regelung eines Servoventils aufgrund der ausgeprägten Nichtlinearitäten der Servo-Ansteuerung (vor allem durch das sogenannte Düsen-Prallplattenprinzip in der Servo-Vorstufe) schwierig.

Verglichen mit Servoventilen ist die direkte Ansteuerung von stetigen Proportional- oder Regelventilen oder von stetigen Schaltventilen mit Magneten deutlich einfacher, weniger schmutzempfindlich, robuster und billiger. Nachteilig daran ist jedoch, dass damit sehr schnelle Ventile nicht realisiert werden können.

Außerdem sind im Stand der Technik Betätigungseinrichtungen für Ventile bekannt, die ein oder mehrere Piezoelemente als Aktuatoren aufweisen. Obwohl Piezoelemente (z.B. Piezo-Keramiken) schnell reagieren und hohe Kräfte aufbringen können, ist daran nachteilig, dass diese nur geringste Hübe bzw. Auslenkungen realisieren können. Auch die Verwendung von sogenannten Piezostacks, z.B. durch die Anordnung von mehreren Piezoelementen übereinander zur Realisierung größerer Hübe bzw. Auslenkungen, führt bei der praktischen Anwendung zu Problemen, zumal selbst diese Hübe für einen Steuerkolben im Normalfall nicht ausreichend sind.

Somit stößt man mit den Betätigungseinrichtungen nach dem Stand der Technik an Grenzen. Da für gewisse Anwendungen (z.B. zur Ansteuerung eines Hydraulikventils zur Unterdrückung bzw. Kompensation von Chatterschwingungen in einem Walzwerk) jedoch nur sehr schnelle Ventile eingesetzt werden können, müssen Servoventile verwendet werden und viele Nachteile bzgl. Preis, Schmutzempfindlichkeit und Nichtlinearität in Kauf genommen werden.

Es gibt daher einen Bedarf nach einer neuen Betätigungseinrichtung für Hydraulikventile, die ebenfalls sehr schnell reagiert, aber die vorgenannten Nachteile bzgl. Preis, Schmutzempfindlichkeit und Nichtlinearität der Ansteuerung nicht aufweist.

Aus der Veröffentlichung

*Alan Hitchcox "Piezo actuators: The future of servovalves?",* hydraulics & pneumatics, 2005 *(siehe http://hydraulicspneumatics.com/200/TechZone/HydraulicVal ves/Article/False/12852/TechZone-HydraulicValves)*

ist ein Piezoaktuator zur Ansteuerung eines Steuerkolbens eines Hydraulikventils bekannt. Wie der äußerst geringe Weg des Piezoaktuators auf einfache Art und Weise erhöht werden kann, geht aus dem Paper nicht hervor.

Auch aus der Veröffentlichung

*Jörg Edler et al. "Investigation of a Servo Valve with a Piezoelectric Pilot Stage",* Fluid Power 2015

ist ein Piezoaktuator für ein hydraulisches Servoventil bekannt. Bedingt durch die Servo-Vorstufe ist das Ventil sehr komplex, schmutzempfindlich und teuer.

Zusammenfassung der Erfindung

Die Aufgabe der Erfindung ist es, die Nachteile des Stands der Technik zu überwinden und eine Betätigungseinrichtung für einen Steuerkolben eines Hydraulikventils zu schaffen, sodass der Steuerkolben schnell angesteuert werden kann. Verglichen mit Betätigungseinrichtungen nach dem Stand der Technik soll die erfindungsgemäße Betätigungseinrichtung besonders einfach, robust und schmutzunempfindlich sein.

Diese Aufgabe wird durch eine Betätigungseinrichtung für einen Steuerkolben eines Hydraulikventils gelöst, wobei das Hydraulikventil ein Gehäuse umfasst, aufweisend

- einen Aktuator und eine Platte, wobei der Aktuator einen zentralen Bereich der Platte durchbiegen kann; und
- einen im Betrieb mit einer Druckflüssigkeit gefüllten Druckraum, wobei die Platte den Druckraum abdichtet und der Druckraum den Steuerkolben beaufschlagt, und die Fläche $A_P$ der Platte über dem Druckraum größer als die Querschnittsfläche $A_K$ des Steuerkolbens ist.

Die erfindungsgemäße Betätigungseinrichtung löst die Aufgabe dadurch, dass ein Aktuator (vorzugsweise ein piezoelektrischer Aktuator, kurz Piezoelement oder nur Piezo) den zentralen Bereich einer Platte verschiebt. Dazu wird der Aktuator, der vorzugsweise in-line mit der Symmetrieachse (bei einer kreisförmigen Platte somit kollinear mit dem Mittelpunkt) der Platte angeordnet ist, bestromt, sodass sich das Piezoelement in axialer Richtung ausdehnt. Die Platte trennt den Raum, in dem das Piezoelement angeordnet ist, von dem mit der Druckflüssigkeit (meistens Hydrauliköl) gefüllten Druckraum. Die Platte dichtet den Druckraum fluiddicht ab. Der Raum, in dem das Piezoelement selbst angeordnet ist, kann mit Öl gefüllt sein oder auch "trocken" sein. Durch das Durchbiegen der Platte wird im Druckraum ein Druck p aufgebaut. Da der Druckraum den Steuerkolben beaufschlägt, wird der Steuerkolben durch die Kraft $F = p \cdot A_K$ verschoben, wobei $A_K$ die Querschnittsfläche des Steuerkolbens ist. Um den Steuerkolben weiter als die axiale Ausdehnung des Piezoelements zu verschieben, ist dabei wichtig, dass die Fläche $A_P$ der Platte über dem Druckraum größer als die Querschnittsfläche $A_K$ des Steuerkolbens ist. Somit wird der Steuerkolben aufgrund der für den Druckraum geltenden Kontinuitätsgleichung quasi mit einer "hydraulischen Wegverstärkung" verschoben. Der Faktor für diese hydraulische Wegverstärkung entspricht vereinfacht dem Verhältnis zwischen der Fläche $A_P$ der Platte über dem Druckraum und der Querschnittsfläche $A_K$ des Steuerkolbens. Bei einem Flächenverhältnis von 64 wird z.B. der Steuerkolben des Ventils etwa 64 mal so weit verschoben als sich das Piezoelement in axialer Richtung ausdehnt, d.h. es kommt eine "hydraulische Wegverstärkung" von 64 zur Anwendung.

Zur Abdichtung des Druckraums kann der äußere Bereich der Platte an dem Gehäuse festgelegt sein, z.B. durch eine Einspannung der Platte.

Zur Erzielung großer Verschiebungen des Steuerkolbens ist es vorteilhaft, wenn die Fläche der Platte über dem Druckraum $A_P$ mindestens 4-mal, bevorzugt mindestens 16-mal, besonders bevorzugt mindestens 36-mal, größer als die Querschnittsfläche des Steuerkolbens $A_K$ ist.

Vorzugsweise ist der Aktuator ein elektrischer Piezoaktuator. Der Piezoaktuator kann z.B. als ein piezoelektrischer Stack ausgebildet sein, wodurch die Verschiebung des Steuerkolbens weiter erhöht wird.

Insbesondere aus steuerungs-/regelungstechnischen Gründen ist es vorteilhaft, wenn der Piezoaktuator ein Wegmesssystem zur Messung einer Ausdehnung des Piezoaktuators in axialer Richtung x aufweist. Hierbei kann die Wegmessung entweder bereits in das Piezoelement integriert sein oder durch ein externes Wegmesssystem erfolgen.

Günstig ist es, wenn die Platte im zentralen Bereich dicker als im äußeren Bereich ist. Dadurch ist die Platte im äußeren Bereich biegeweich, sodass die Kraft für das Durchbiegen der Platte niedrig gehalten wird. Andererseits sorgt ein dickerer zentraler Bereich dafür, dass die Biegung der Platte durch den Aktuator über einen weiten Bereich relativ konstant gehalten wird.

Eine lange Lebensdauer der Platte bzw. der Betätigungseinrichtung wird erreicht, wenn die Platte aus Stahl, vorzugsweise Federstahl, besteht.

Bei einer gegebenen Kraft wird eine hohe Durchbiegung erreicht, wenn die Platte rund, vorzugsweise kreisrund, ist.

Die Stellung des Steuerkolbens in den sogenannten Endlagen kann einfach dadurch festgelegt werden, wenn der zentrale Bereich der Platte einen Haltemagneten aufweist. Durch den Haltemagneten - vorzugsweise ein Permanentmagnet, aber auch Elektromagneten sind möglich - wird die Stellung eines ferromagnetischen Steuerkolbens in einer Endlage weitgehend unabhängig von Strömungskräften festgelegt.

Der Druckraum kann einfach und leckagearm abgedichtet werden, wenn eine fluiddichte Dichtung zwischen der Platte und dem Gehäuse vorhanden ist.

Neben der Betätigungseinrichtung für einen Steuerkolben für ein Hydraulikventil soll auch ein Hydraulikventil mit einer erfindungsgemäßen Betätigungsvorrichtung beansprucht werden. Die Erfindung ist aber nicht auf Hydraulikventile für die hydraulische Antriebstechnik eingeschränkt. Vielmehr lassen sich durch die Betätigungseinrichtung auch Ventile für metallurgische Anlagen, z.B. Walzwerke, Stranggießanlagen etc., realisieren, wobei bei diesen Anlagen typischerweise ein Metall (z.B. ein Stahlstrang mit Brammenformat, oder ein Vor- oder Fertigstreifen) durch Kühldüsen gekühlt wird. Die Einstellung des Durchflusses durch eine oder mehrere Kühldüsen kann z.B. durch ein Hydraulikventil mit zumindest einer erfindungsgemäßen Betätigungseinrichtung erfolgen.

Zur Fixierung des Steuerkolbens in einer Endlagen ist es zweckmäßig, wenn der Steuerkolben aus Stahl, vorzugsweise aus ferromagnetischem Stahl, besteht.

Ein "Ankleben" der Stirnfläche des Steuerkolbens an der Platte kann verhindert werden, wenn die Stirnfläche des Steuerkolbens eine Bombierung aufweist.

Eine einfache Konstruktion des Hydraulikventils wird erreicht, wenn das Gehäuse einen Ventilblock und einen Deckel aufweist, wobei der Deckel lösbar mit dem Ventilblock verbunden ist und sich der Aktuator am Deckel abstützt.

Zur Regelung der Position des Steuerkolbens ist es günstig, wenn der Ventilblock ein Wegmesssystem zur Messung einer Position des Steuerkolbens aufweist. Somit kann auf externe Wegmesssysteme außerhalb des Ventilblocks verzichtet werden.

Eine einfache und effektive Ansteuerung des Hydraulikventils wird erreicht, wenn ein Verstärker ein Steuersignal verstärkt und zumindest einen Aktuator mit dem verstärkten Steuersignal bestromt.

Eine einfache und effektive Ansteuerung des Hydraulikventils mit einem Regler und einem Verstärker wird erreicht, wenn der Regler ein Stellgrößensignal u in Abhängigkeit einer Differenz zwischen einer Soll-Position und einer Ist-Position des Steuerkolbens berechnet, und der Verstärker zumindest einen Aktuator mit dem verstärkten Stellgrößensignal bestromt.

In beiden Fällen wird das Steuer- bzw. Stellgrößensignal durch einen Verstärker verstärkt und so die empfindliche Steuerung/Regelung vom Leistungsteil des Aktuators getrennt. Insbesondere bei der Regelung kann durch das Bestromen des Piezoelements zudem die zeitliche Ausdehnung des Aktuators gezielt eingestellt werden. Möglich sind hier nicht nur das Aufschalten eines Sprungs, was entsprechend der Dynamik des Piezoelements zu einer raschen axialen Ausdehnung des Piezoelements führt, sondern beliebige Verläufe, wie z.B. rampenförmige, trapezförmige, sinusförmige Verläufe etc.

Für viele Ventiltypen, z.B. für ein 3/2 Wege Schalt- oder Stetigventil oder für ein 4/3 Wege Schalt- oder Stetigventil, ist es günstig, wenn beide Enden des Steuerkolbens jeweils von einer Betätigungseinrichtung betätigt werden.

Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei die folgenden Figuren zeigen:

Fig 1 einen Längsschnitt durch ein Hydraulikventil mit einer Betätigungseinrichtung und einer Feder

Fig 2 einen Halbschnitt durch eine erste Alternative der Betätigungseinrichtung mit einem Haltemagneten

Fig 2a und Fig 2b eine Prinzipdarstellung der Funktionsweise der Betätigungseinrichtung anhand zweier Stellungen

Fig 3 einen Längsschnitt durch ein Hydraulikventil mit zwei Betätigungseinrichtungen

Fig 4 eine schematische Darstellung der Spulen einer Wegmesseinrichtung für ein Hydraulikventil

Fig 5 eine Darstellung der Ansteuerung eines Piezoaktuators

Fig 6 eine Darstellung der Regelung der axialen Ausdehnung eines Piezoaktuators

Fig 7 eine Darstellung der Regelung der Position eines Steuerkolbens eines Hydraulikventils mit zwei Betätigungseinrichtungen

Fig 8 ein Halbschnitt durch zwei Varianten einer Betätigungseinrichtung

Beschreibung der Ausführungsformen

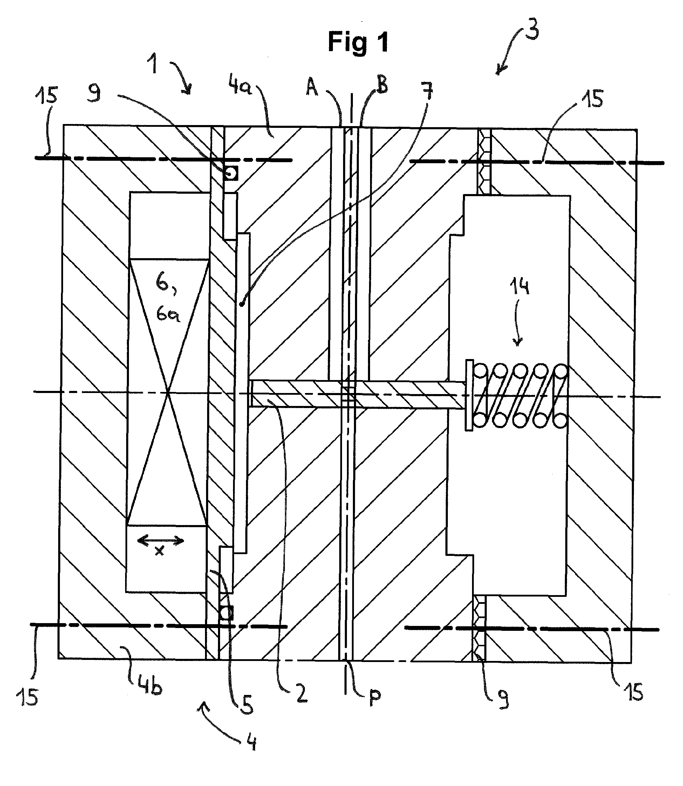

Die Fig 1 zeigt ein 3/2-Wege (die Zahl vor dem Schrägstrich steht für die Anzahl der Anschlüsse und die Zahl hinter dem Schrägstrich für die Anzahl der Stellungen des Ventils) Hydraulikventil 3 mit einer Betätigungseinrichtung 1, das auf der linken Seite der Figur angeordnet ist. Das Hydraulikventil 3 arbeitet als Schaltventil und weist einen Steuerkolben 2 auf, der in einer Bohrung im Ventilblock 4a verschiebbar geführt ist. Je nach der Stellung des Steuerkolbens 2 wird der Druckanschluss p des Ventils 3 entweder mit dem Anschluss A oder dem Anschluss B verbunden. Der Steuerkolben 2 wird einerseits durch die Betätigungseinrichtung 1 und andererseits durch eine Feder 14 beaufschlagt. Die Betätigungseinrichtung 1 weist eine kreisförmige Platte 5 aus Federstahl auf, die zwischen dem Ventilblock 4a und dem Deckel 4b des Gehäuses 4 eingespannt ist. Beide Teile des Gehäuses 4 sind durch Schraubenverbindungen 15 lösbar miteinander verbunden, sodass der Aktuator 6, die Platte 5 oder auch die gesamte Betätigungseinrichtung 1 einfach ausgetauscht werden können. Auf der linken Seite der Platte 5 ist ein als Stack ausgeführter piezoelektrischer Aktuator 6 (der Piezoaktuator 6a) angeordnet, sodass der zentrale Bereich der Platte 5 durch den Aktuator durchgebogen werden kann. Da die Platte 5 im äußeren Bereich dünner als im zentralen Bereich ist, wird die benötigte Kraft zum Durchbiegen der Platte niedrig gehalten. Auf der rechten Seite der Platte 5 befindet sich ein Druckraum 7. Durch das Bestromen des Aktuators 6, 6a, dehnt sich der Aktuator 6 in axialer Richtung x aus und biegt den zentralen Bereich der Platte 5 durch. Da der Druckraums 7 mit einem Druckmedium (hier Hydrauliköl) gefüllt ist, steigt durch das Durchbiegen der Platte 5, welche eine Biegelinie beschreibt, der Druck p im Druckraums 7 an. Der Druckraum 7 wird von der Platte 5 und einer Dichtung 9, die sich zwischen der Platte 5 und dem Ventilblock 4a befindet, fluiddicht abgedichtet. Da der Druckraum 7 die Stirnfläche des Steuerkolbens 2 beaufschlagt, wird der Steuerkolben 2 mit der Kraft $F = p \cdot A_K$, wobei $A_K$ die Querschnittsfläche des Steuerkolbens ist, in Richtung der Feder verdrängt. Durch das Verschieben des Steuerkolbens wird der Druckanschluss p des Hydraulikventils 3 mit dem Anschluss B verbunden. Nachdem das Bestromen des Piezoaktuators 6a beendet wird, wird der Steuerkolben 2 durch die Druckfeder 14 wieder nach links verschoben, sodass der Anschluss p wider mit dem Anschluss A des Hydraulikventils verbunden ist.

Gemäß der Darstellung von Fig 1 beträgt das Verhältnis zwischen der Fläche $A_P$ der Platte 5 über dem Druckraum 7 zur Querschnittsfläche $A_K$ des Steuerkolbens 2 ca. 225. Durch die erfindungsgemäße Betätigungseinrichtung 1 kann somit eine Längenänderung des piezoelektrischen Aktuators 6a von bspw. $60\,\mu m$ auf einfache Art und Weise den Steuerkolben 2 um ca. 10mm verschieben. Von großem Vorteil ist, dass die "Wegverstärkung" rein hydraulisch funktioniert und die Betätigungseinrichtung 1 bis auf die Platte 5 und den Aktuator 6, 6a, keine bewegten Teile aufweist. Daher ist die Betätigungseinrichtung 1 sehr einfach, zuverlässig und zudem wenig schmutzempfindlich. Das Bewegen eines Steuerkolbens 2 gegenüber einer Feder 14 ist dem Fachmann aus einer Vielzahl von Ventiltypen bekannt, sodass auf eine detaillierte Erläuterung der rechten Seite des Hydraulikventils 3 von Fig 1 verzichtet werden kann.

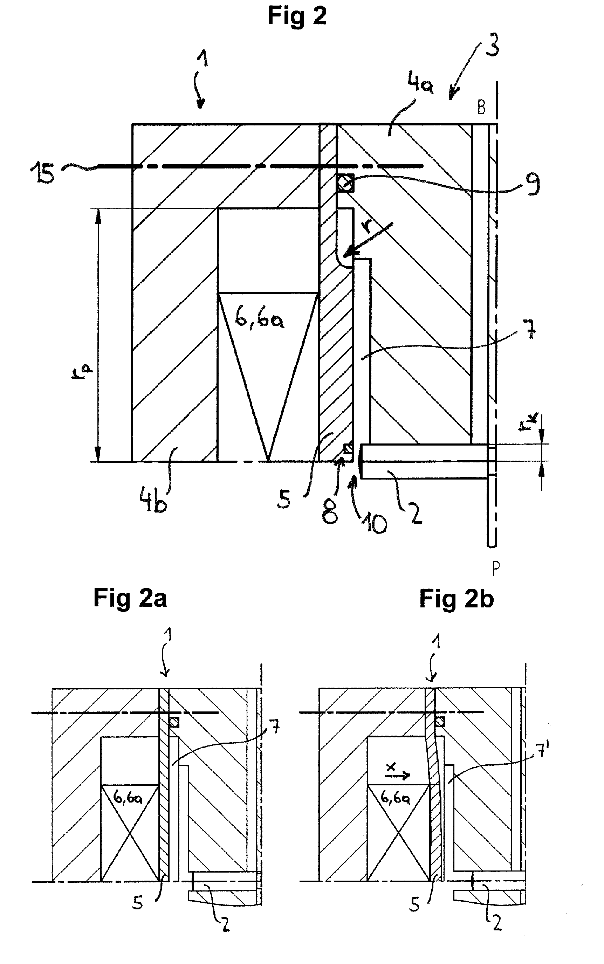

In Fig 2 ist ein Viertelschnitt durch ein Hydraulikventil 3 mit einer weiteren Betätigungseinrichtung 1 dargestellt. Die Ausführungsform der Fig 2 weist zusätzlich zu der Betätigungseinrichtung 1 von Fig 1 einen Steuerkolben 2 mit einer Bombierung 10 der Stirnfläche auf. Damit wird das sogenannte "Ankleben" des Steuerkolbens 2 an der Platte 5 verhindert. Außerdem weist der zentrale Bereich der Platte 5 einen permanentmagnetischen Haltemagneten 8 auf, der den ferromagnetischen Steuerkolben 2 aus Stahl in einer Endlage halten kann. Weiters dargestellt ist der Radius $r_K$ des zylindrischen Steuerkolbens 2 und der Radius $r_P$ der kreisrunden Platte 5 über dem Druckraum 7, wobei gilt $A_K = r_K^2 \cdot \pi$ und $A_P = r_P^2 \cdot \pi$. Die Platte 5 weist eine Ausrundung r zwischen dem dickeren und dem dünneren Teil auf, wodurch die Betriebsfestigkeit der Platte 5 erhöht wird.

In den Fig 2a und 2b ist die Funktionsweise der erfindungsgemäßen Betätigungseinrichtung nochmals vereinfacht dargestellt. In Fig 2a befindet sich der Aktuator 6, 6a im Ruhezustand, die Platte 5 ist nicht durchgebogen und auch der Steuerkolben befindet sich in einer Anfangsstellung. Hingegen ist in Fig 2b der Aktuator 6, 6a in axialer Richtung x ausgefahren und bewirkt eine Durchbiegung der Platte 5. Die Durchbiegung der Platte bewirkt eine Erhöhung des Drucks p im Druckraum 7', sodass der Steuerkolben 2 durch die Verdrängung nach rechts verschoben wird. Im eingeschwungenen Zustand ist der Druckraum 7 und 7'gleich groß, sodass sich der Steuerkolben 2 in Fig 2b weiter rechts befindet als in Fig 2a.

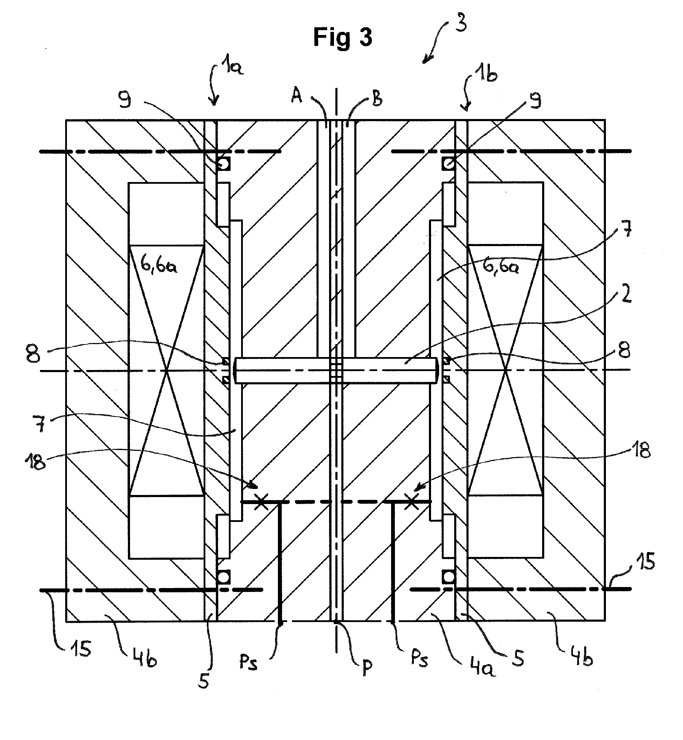

Die Fig 3 zeigt einen schematischen Längsschnitt durch ein nichtstetiges 3/2-Wege Hydraulikventil 3 mit zwei Betätigungseinrichtungen 1a, 1b. Der konstruktive Aufbau der Betätigungseinrichtungen 1a, 1b ist sehr ähnlich zum Aufbau von Fig 2, jedoch wird der Steuerkolben von den beiden Betätigungseinrichtungen beaufschlagt und von den beiden Haltemagneten 8 in den jeweiligen Endlagen gehalten. Somit wird ein äußerst schnelles Schaltventil geschaffen. Um insbesondere im schnellschaltenden Betrieb des Hydraulikventils 3 stets eine vollständige Füllung der Druckräume 7 sicherzustellen, sind die Druckräume 7 mit einem Steuerdruck $p_s$ verbunden, der über eine enge Blende bzw. Drossel 18 etwaige Leckagen aus dem Druckraum 7 wieder ausgleicht. Alternativ dazu können - so wie strichliert dargestellt - auch Stichleitungen vom Druckanschluss p zu den Druckräumen 7 führen.

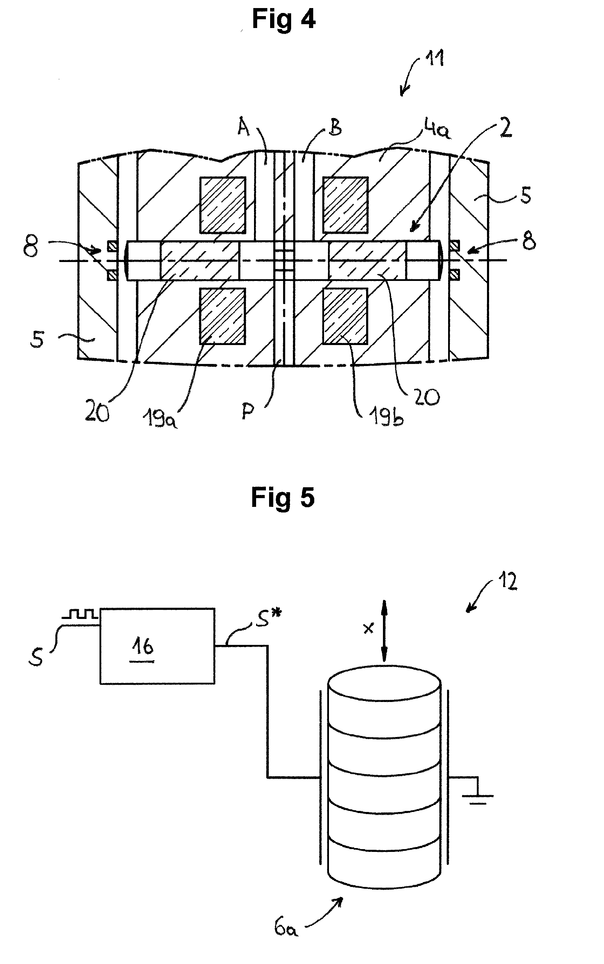

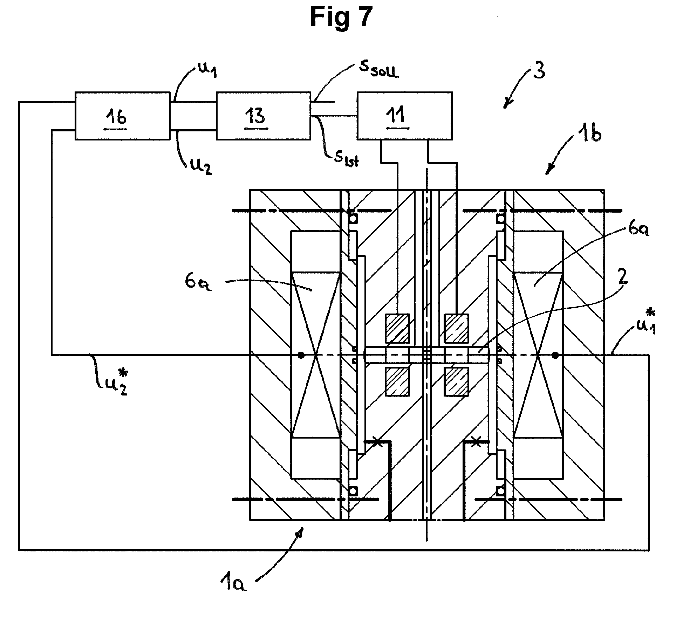

Die Fig 4 zeigt schematisch die Spulen eines Wegmesssystems 11 zur Bestimmung der Ist-Position $S_{Ist}$ des Steuerkolbens 2. Der Steuerkolben 2 ist magnetisch (z.B. aus Stahl mit einem ferritischen Gefüge), weist jedoch auch mind. einen nichtmagnetischen Teil 20 auf. Durch die zwei - eine Differentialdrossel bildenden - Spulen 19a, 19b kann die Position $S_{Ist}$ des Steuerkolbens 2 durch eine hier nicht weiter dargestellte Auswerteelektronik (siehe z.B. Fig 7) für induktive Wegaufnehmer bestimmt werden. Auswerteelektroniken für induktive Wegaufnehmer sind dem Fachmann bekannt, siehe z.B. http://www.lvdt.de.

Die Fig 5 zeigt schematisch eine Steuerung 12 für einen als Piezostack ausgeführten Piezoaktuator 6a einer Betätigungseinrichtung 1. Das Steuersignal S - hier einfach Pulse - wird vom Verstärker 16 entsprechend der Signalform verstärkt und das verstärkte Steuersignal S* als Spannungssignal dem Piezostack 6a zugeführt. Der Piezostack 6a dehnt sich in Abhängigkeit des Steuersignals S in axialer Richtung x aus und biegt eine hier nicht dargestellte Platte 5 der Betätigungseinrichtung 1 durch, was zu einer Verschiebung eines Steuerkolbens 2 führt.

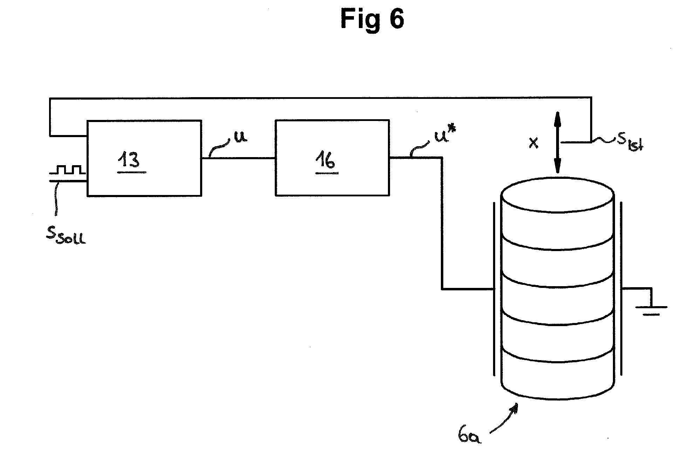

Die Fig 6 zeigt schematisch eine Regelung für einen als Piezostack ausgeführten Piezoaktuator 6a einer Betätigungseinrichtung 1. Das Sollsignal $s_{soll}$ für die Ausdehnung des Piezoaktuators 6a - hier wieder Pulse - wird einem Regler 13 zugeführt, der in Abhängigkeit der Differenz zwischen der Ist-Ausdehnung $S_{Ist}$ des Piezoaktuators 6a und dem Sollsignal $s_{soll}$ eine Stellgröße u berechnet. Die Stellgröße u wird vom Verstärker 16 verstärkt und das verstärkte Signal u* als Spannungssignal dem Piezostack 6a zugeführt. Die Fig 6 zeigt somit eine einfach Positionsregelung für die Ausdehnung des Piezoaktuators 6a.

Fig 7 zeigt schematisch eine Positionsregelung für die Position eines Steuerkolbens 2 in einem Hydraulikventil 3 mit zwei Betätigungseinrichtungen 1a, 1b. Über die beiden Spulen der Wegmesseinrichtung 11 (Aufbau siehe Fig 4) wird die Position $S_{Ist}$ des Steuerkolbens 2 bestimmt. Die Ist-Position des Steuerkolbens $S_{Ist}$ und dessen Soll-Position $s_{soll}$ werden einem Regler 13 zugeführt, der in Abhängigkeit der Differenz zwischen $s_{soll}$ und $S_{Ist}$ zwei Stellgrößen $u_1$, $u_2$ berechnet. Die Stellgrößen werden vom Verstärker 16 verstärkt und die verstärkten Signale $u_1^*$, $u_2^*$ als Spannungssignale den Piezostacks 6a der beiden Betätigungseinrichtungen 1a, 1b zugeführt. Somit gibt die Fig 7 eine einfache Regelung für die Position des Steuerkolbens 2 eines Hydraulikventils 3 mittels zweier Betätigungseinrichtung 1a, 1b an.

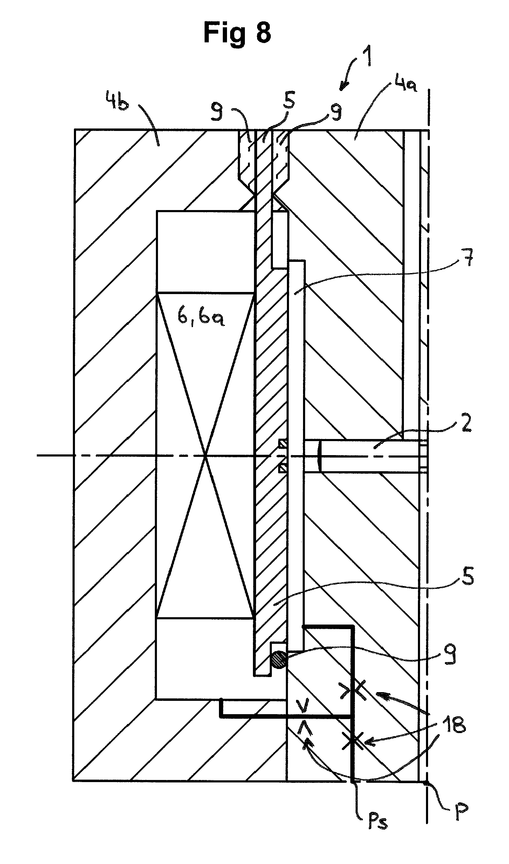

Die Fig 8 zeigt einen Halbschnitt durch zwei Varianten einer Betätigungseinrichtung 1, die jeweils oberhalb und unterhalb der horizontalen Symmetrieachse dargestellt sind. Um die notwendige Kraft für den Aktuator 6, 6a zur Durchbiegung der Platte 5 zu reduzieren, ist in beiden Varianten die Platte 5 gelenkig gelagert und der Aktuator "nass" ausgeführt.

Bei der oberen Variante liegt die Platte 5 auf je einer Erhebung im Ventilblock 4a und im Deckel 4b auf und ist über zwei elastische Dichtungen 9 abgedichtet. Außerdem ist der Druckraum 7 und der Raum, in dem sich der Aktuator 6, 6a befindet, über mehrere Blenden/Drosseln 18 mit einem Steuerdruck $p_s$ verbunden. Somit gleicht sich der statische Druck links und rechts der Platte 5 aus, sodass die Platte 5 entlastet wird. Das Durchbiegen der Platte 5 durch den Aktuator 6, 6a führt aber wiederum zu einem Druckanstieg im Druckraum 7, welcher den Steuerkolben 2 verschiebt.

Bei der unteren Variante liegt die Platte auf einer steifen Dichtung 9 auf, was ebenfalls einer gelenkigen Lagerung der Platte 5 entspricht.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 1,1a,1b | Betätigungseinrichtung |
| 2 | Steuerkolben |
| 3 | Hydraulikventil |
| 4 | Gehäuse |
| 4a | Ventilblock |
| 4b | Deckel |
| 5 | Platte |
| 6 | Aktuator |
| 6a | Piezoaktuator |
| 7, 7' | Druckraum |

| | |
|---|---|
| 8 | Haltemagnet |
| 9 | Dichtung |
| 10 | Bombierung |
| 11 | Wegmesssystem |
| 12 | Steuerung |
| 13 | Regler |
| 14 | Feder |
| 15 | Schraubenverbindung |
| 16 | Verstärker |
| 18 | Blende |
| 19a,19b | Spule |
| 20 | Nicht magnetischer Teil des Steuerkolbens |
| A | Anschluss A des Hydraulikventils |
| B | Anschluss B des Hydraulikventils |
| p | Druckanschluss des Hydraulikventils |
| $p_s$ | Steuerdruck |
| r | Radius |
| $r_K$ | Radius des Steuerkolbens |
| $r_P$ | Radius der Platte über dem Druckraum |
| S | Steuersignal |
| S* | verstärktes Steuersignal |
| $S_{Ist}$ | Ist-Position |
| $S_{Soll}$ | Soll-Position |
| u, $u_1$, $u_2$ | Stellgröße |
| u*, $u_1^*$, $u_2^*$ | verstärktes Stellgrößensignal |
| x | axiale Richtung |

**Patentansprüche**

1. Betätigungseinrichtung (1, 1a, 1b) für einen Steuerkolben (2) eines Hydraulikventils (3), wobei das Hydraulikventil (3) ein Gehäuse (4) umfasst, aufweisend

   - einen Aktuator (6) und eine Platte (5), wobei der Aktuator (6) einen zentralen Bereich der Platte (5) durchbiegen kann;
   - einen im Betrieb mit einer Druckflüssigkeit gefüllten Druckraum (7), wobei die Platte (5) den Druckraum (7) abdichtet und der Druckraum (7) den Steuerkolben (2) beaufschlagt, und die Fläche $A_P$ der Platte (5) über dem Druckraum (7) größer als die Querschnittsfläche $A_K$ des Steuerkolbens (2) ist.

2. Betätigungseinrichtung nach Anspruch 1, **dadurch gekennzeichnet, dass** die Fläche $A_P$ der Platte (5) über dem Druckraum (7) mindestens 4-mal, bevorzugt mindestens 16-mal, besonders bevorzugt mindestens 36-mal, größer als die Querschnittsfläche $A_K$ des Steuerkolbens (2) ist.

3. Betätigungseinrichtung nach einem der vorhergehenden Ansprüche, **dadurch gekennzeichnet, dass** der Aktuator (6) ein elektrischer Piezoaktuator (6a) ist.

**4.** Betätigungseinrichtung nach Anspruch 3, **dadurch gekennzeichnet, dass** der Piezoaktuator (6a) ein Wegmesssystem zur Messung einer Ausdehnung des Piezoaktuators (6a) in axialer Richtung x aufweist.

**5.** Betätigungseinrichtung nach einem der hervorgehenden Ansprüche, **dadurch gekennzeichnet, dass** ein zentraler Bereich der Platte (5) dicker ist als ein äußerer Bereich.

**6.** Betätigungseinrichtung nach einem der hervorgehenden Ansprüche, **dadurch gekennzeichnet, dass** die Platte (5) aus Stahl, vorzugsweise Federstahl, besteht.

**7.** Betätigungseinrichtung nach einem der hervorgehenden Ansprüche, **dadurch gekennzeichnet, dass** die Platte (5) rund, vorzugsweise kreisrund, ist.

**8.** Betätigungseinrichtung nach einem der hervorgehenden Ansprüche, **dadurch gekennzeichnet, dass** der zentrale Bereich der Platte (5) einen Haltemagneten aufweist.

**9.** Betätigungseinrichtung nach einem der vorhergehenden Ansprüche, **dadurch gekennzeichnet, dass** eine fluiddichte Dichtung (9) zwischen der Platte (5) und dem Gehäuse (4, 4a) vorhanden ist.

**10.** Betätigungseinrichtung nach einem der vorhergehenden Ansprüche, **dadurch gekennzeichnet, dass** der Druckraum (7) von einer Leitung, die vorzugsweise eine Blende aufweist, mit Druck (p, pS) versorgt wird.

**11.** Hydraulikventil (3) mit einer Betätigungsvorrichtung (1) nach einem der vorhergehenden Ansprüche.

**12.** Hydraulikventil nach Anspruch 11, **dadurch gekennzeichnet, dass** der Steuerkolben (2) aus Stahl, vorzugsweise aus ferromagnetischem Stahl, besteht.

**13.** Hydraulikventil nach einem der Ansprüche 11 bis 12, **dadurch gekennzeichnet, dass** die Stirnfläche des Steuerkolbens (2) eine Bombierung aufweist.

**14.** Hydraulikventil nach einem der Ansprüche 11 bis 13, **dadurch gekennzeichnet, dass** das Gehäuse (4) einen Ventilblock (4a) und einen Deckel (4b) aufweist, wobei der Deckel (4b) lösbar mit dem Ventilblock (4a) verbunden ist und sich der Aktuator (6) am Deckel (4b) abstützt.

**15.** Hydraulikventil nach Anspruch 14, **dadurch gekennzeichnet, dass** der Ventilblock (4a) ein Wegmesssystem zur Messung einer Position des Steuerkolbens (2) aufweist.

**16.** Hydraulikventil nach einem der vorhergehenden Ansprüche 11 bis 15, **dadurch gekennzeichnet, dass** ein Verstärker (16) ein Steuersignal (S) verstärkt und einen Aktuator (6, 6a) mit dem verstärkten Steuersignal (S*) bestromt.

**17.** Hydraulikventil nach Anspruch 15 mit einem Regler (13) und einem Verstärker (16), **dadurch gekennzeichnet, dass** der Regler (13) ein Stellgrößensignal u in Abhängigkeit einer Differenz zwischen einer Soll-Position und einer Ist-Position berechnet, und der Verstärker (16) zumindest einen Aktuator (6, 6a) mit dem verstärkten Stellgrößensignal bestromt.

**18.** Hydraulikventil nach einem der Ansprüche 11 bis 17, **dadurch gekennzeichnet, dass** die beiden Enden des Steuerkolbens (2) jeweils von einer Betätigungseinrichtung (1a, 1b) betätigt werden.

## Fig 1

## Fig 2

## Fig 2a

## Fig 2b

Fig 3

# Fig 4

# Fig 5

# Fig 6

# Fig 7

# Fig 8

**Europäisches Patentamt**
**European Patent Office**
**Office européen des brevets**

# EUROPÄISCHER RECHERCHENBERICHT

Nummer der Anmeldung

EP 16 16 5928

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/311116 A1 (BAI SHUSHAN [US] ET AL) 17. Dezember 2009 (2009-12-17) | 1,3,5,7, 9,11 | INV. F16K31/126 |
| Y | * Absatz [0018] - Absatz [0032]; Ansprüche; Abbildungen * | 4,6,8, 12,13, 15-18 | F16K31/163 F16K31/165 |
| X | WO 99/58840 A1 (SIEMENS AG [DE]; SIEMENS AUTOMOTIVE CORP LP [US]) 18. November 1999 (1999-11-18) | 1-3,5-7, 10,11 | |
| Y | * Seite 9, Absatz 1 - Seite 21, Absatz 4; Ansprüche; Abbildungen * | 6,8,12, 13,15-18 | |
| X | DE 44 07 962 C1 (CONTINENTAL AG [DE]) 1. Juni 1995 (1995-06-01) | 1,2,5,6, 9 | |
| A | * Spalte 1, Zeile 1 - Spalte 4, Zeile 2; Ansprüche; Abbildungen * | 3,4,7,8, 10-18 | |
| Y | CN 102 192 135 A (UNIV ZHEJIANG NORMAL) 21. September 2011 (2011-09-21) * Zusammenfassung; Abbildungen * | 4 | |
| Y | DE 88 01 009 U1 (R. UND D. ROTTER GMBH MED.CHEM. APPARATE- UND ANLAGENBAU) 7. April 1988 (1988-04-07) * Seite 10, Absatz 2 - Seite 12, Absatz 2; Ansprüche 1,12,13,14; Abbildungen * * Seite 3, Absatz 4 - Seite 4, Absatz 1 * | 8 | **RECHERCHIERTE SACHGEBIETE (IPC)** F16K |
| Y | US 2013/068200 A1 (REYNOLDS PAUL [US] ET AL) 21. März 2013 (2013-03-21) * Absatz [0067] - Absatz [0077]; Abbildungen 1-7 * * Absatz [0112] - Absatz [0112] * | 12,13 | |

-/--

Der vorliegende Recherchenbericht wurde für alle Patentansprüche erstellt

| Recherchenort | Abschlußdatum der Recherche | Prüfer |
|---|---|---|
| Den Haag | 7. Februar 2017 | Müller, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
    ............................................................
& : Mitglied der gleichen Patentfamilie, übereinstimmendes Dokument

EPO FORM 1503 03.82 (P04C03)

| | Europäisches Patentamt European Patent Office Office européen des brevets | EUROPÄISCHER RECHERCHENBERICHT | Nummer der Anmeldung EP 16 16 5928 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | MATTEN N ET AL: "STETIGWIRKENDES WEGEVENTIL MIT PIEZOAKTUATORISCHEM STELLELEMENT", O & P - OELHYDRAULIK UND PNEUMATIK: ZEITSCHRIFT FUER FLUIDTECHNIK, AKTORIK, STEUERELEKTRONIK UND SENSORIK, VEREINIGTE FACHVERLAGE GMBH, DE, Bd. 38, 1. Juni 1994 (1994-06-01), XP000195279, ISSN: 0341-2660 * Seite 354, Absatz 1 - Seite 355, Absatz 3; Abbildungen * ----- | 15 | |
| Y | HERAKOVIC N: "PIEZOAKTORBETATIGUNG FUR EIN EINSTUFIGES HOCHDYNAMISCHES SERVOVENTIL", O & P - OELHYDRAULIK UND PNEUMATIK: ZEITSCHRIFT FUER FLUIDTECHNIK, AKTORIK, STEUERELEKTRONIK UND SENSORIK, VEREINIGTE FACHVERLAGE GMBH, DE, Bd. 39, Nr. 8, 1. August 1995 (1995-08-01) , Seiten 601-605, XP000515989, ISSN: 0341-2660 * Seite 601, Spalte 3, Absatz 3 - Seite 604, Spalte 1, Absatz 1; Abbildungen * ----- -/-- | 6,15-17 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 7. Februar 2017 | Müller, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................
& : Mitglied der gleichen Patentfamilie, übereinstimmendes Dokument

EPO FORM 1503 03.82 (P04C03)

Europäisches Patentamt

European Patent Office

Office européen des brevets

Nummer der Anmeldung

EP 16 16 5928

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WENNMACHER G ET AL: "PROTOTYP EINES DYNAMISCHEN SCHNELLSCHALTVENTILES MIT PIEZOELEKTRISCHER ANSTEUERUNG", O & P - OELHYDRAULIK UND PNEUMATIK: ZEITSCHRIFT FUER FLUIDTECHNIK, AKTORIK, STEUERELEKTRONIK UND SENSORIK, VEREINIGTE FACHVERLAGE GMBH, DE, Bd. 37, Nr. 10, 1. Januar 1993 (1993-01-01), Seiten 794-797, XP000195248, ISSN: 0341-2660 * Seite 794, Spalte 2, Absatz 3 - Seite 797, Spalte 3, Absatz 2 * | 15-17 | |
| Y | EP 1 229 264 A2 (HYDRAULIK RING GMBH [DE]) 7. August 2002 (2002-08-07) * Absatz [0011] - Absatz [0031]; Abbildungen * | 18 | |
| A | US 6 154 000 A (RASTEGAR JAHANGIR [US] ET AL) 28. November 2000 (2000-11-28) * das ganze Dokument * | 4 | RECHERCHIERTE SACHGEBIETE (IPC) |
| A | US 6 062 532 A (GUERICH GUNTER [DE] ET AL) 16. Mai 2000 (2000-05-16) * das ganze Dokument * | 1-18 | |

Der vorliegende Recherchenbericht wurde für alle Patentansprüche erstellt

| Recherchenort | Abschlußdatum der Recherche | Prüfer |
|---|---|---|
| Den Haag | 7. Februar 2017 | Müller, Bernhard |

Seite 3 von 3

## ANHANG ZUM EUROPÄISCHEN RECHERCHENBERICHT
## ÜBER DIE EUROPÄISCHE PATENTANMELDUNG NR.

EP 16 16 5928

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-02-2017

| Im Recherchenbericht angeführtes Patentdokument | Datum der Veröffentlichung | Mitglied(er) der Patentfamilie | Datum der Veröffentlichung |
|---|---|---|---|
| US 2009311116 A1 | 17-12-2009 | CN 101608611 A<br>DE 102009024759 A1<br>US 2009311116 A1 | 23-12-2009<br>21-01-2010<br>17-12-2009 |
| WO 9958840 A1 | 18-11-1999 | US 5875764 A<br>WO 9958840 A1 | 02-03-1999<br>18-11-1999 |
| DE 4407962 C1 | 01-06-1995 | KEINE | |
| CN 102192135 A | 21-09-2011 | KEINE | |
| DE 8801009 U1 | 07-04-1988 | KEINE | |
| US 2013068200 A1 | 21-03-2013 | US 2013068200 A1<br>US 2015285198 A1 | 21-03-2013<br>08-10-2015 |
| EP 1229264 A2 | 07-08-2002 | AT 304667 T<br>DE 10103426 A1<br>DE 50204212 D1<br>EP 1229264 A2<br>PT 1229264 E<br>US 2002178902 A1 | 15-09-2005<br>01-08-2002<br>20-10-2005<br>07-08-2002<br>30-11-2005<br>05-12-2002 |
| US 6154000 A | 28-11-2000 | US 6154000 A<br>US 2002046564 A1 | 28-11-2000<br>25-04-2002 |
| US 6062532 A | 16-05-2000 | DE 19803842 A1<br>DE 29708546 U1<br>JP H112350 A<br>US 6062532 A | 19-11-1998<br>10-09-1998<br>06-01-1999<br>16-05-2000 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ALAN HITCHCOX.** PIEZO ACTUATORS: THE FUTURE OF SERVOVALVES? . *hydraulics & pneumatics,* 2005

- **JÖRG EDLER.** INVESTIGATION OF SERVO VALVE WITH A PIEZOELECTRIC PILOT STAGE. *Fluid Power,* 2015